# EUROPEAN PATENT SPECIFICATION

(11) **EP 3 511 203 B1**
(45) Date of publication and mention of the grant of the patent: **09.08.2023**
(21) Application number: 17848202.2
(22) Date of filing: 01.02.2017
(51) Int. Cl.: B60N 2/60, A47C 31/11

(54) **SEAT COVER**
SITZBEZUG
HOUSSE DE PROTECTION

(30) Priority: 09.09.2016 ES 201631108 U
(43) Date of publication of application: 17.07.2019
(73) Proprietor: IDE Automotive España S.L., 08830 Sant Boi de Llobregat Barcelona (ES)
(72) Inventor: HERMANN, Otto, 08830 Sant Boi de Llobregat Barcelona (ES)
(74) Representative: Elzaburu S.L.P.
(86) International application number: PCT/ES2017/070054
(87) International publication number: WO 2018/046780

(56) References cited:
- AU-A4- 2006 100 030
- DE-A1- 3 419 728
- ES-T3- 2 151 983
- FR-A3- 2 491 315
- GB-A- 2 407 762
- JP-U- H0 636 450
- JP-U- S57 178 561
- US-A- 1 836 302
- US-B1- 7 000 984

## Description

### Object

The present invention relates to a protective seat cover for vehicles.

### State of the art

Currently, in the field of maintenance, transfer, or protection of vehicles, it is common practice to equip the seats with protective covers; that is to say, intended to cover the seat upholstery to keep them in perfect condition.

In order that the same covers can be used in vehicles with different types of seats, solutions have been proposed that enable adaptation of their dimensions to the protected seat through the use of an elastic or rigid edge, welded, or pleated edges along the protective cover, that allow adjustment of the protective cover to the seat and to attach the same cover to the rear or back of the seat.

This means of adaptation does not prevent that when a person sits in the seat, the whole cover will inevitably slide on the seat due to the friction of the operator upon entering or leaving the vehicle.

### Summary

The present invention seeks to resolve one or more of the problems described above by using a seat cover as defined in the claims.

The seat cover comprises at least one flat bag-shaped backrest portion, which includes an opening for introduction of the seat back to be covered; the backrest portion extends longitudinally over a portion of the seat, forming a continuous one-piece wrapping of the seat, and an adjustment band is installed close to the furthest edge of the seat portion, with the adjustment band attached along the longitudinal sides of the seat portion by a fastening system.

In the rest position of the seat cover, the adjustment band is overlapped over the seat portion.

In a working position of the seat cover, the seat portion extends over the seat base, and its far edge extends toward the bottom part of the seat, so that the adjustment band is detachable from the seat portion, without ceasing to be physically attached to the longitudinal side edges of the seat portion, so that the adjustment band extends toward the bottom part of the seat to attach the seat cover to the seat itself in a removable fashion; that is, it prevents the seat cover from being displaced in any possible working condition; namely, the seat cover covers the vehicle seat.

The seat cover, including the band, is of the universal type designed to cover and protect the seat regardless of the size, dimension, colour, or material, and, by means of the adjustment band, the seat cover is easily adjustable and tensioned to the dimensions of the seat to be protected.

Therefore, the seat cover can fit over and be removed easily from the seat simply by engaging and disengaging the adjustment band from the lower part of the seat base and pulling up the backrest portion to remove it completely from the back of the seat that it covers.

The seat cover with band is made of a recyclable and/or recycled plastic material such as low-density polythene (LDPE), linear low-density polythene (LLDPE), medium-density polythene (MDPE), high-density polythene (HDPE), and/or mixtures thereof and/or other polymers, that can be made with organic, biodegradable, or compostable raw materials.

AU 2006 100 030 A4 discloses a seat cover to cover all the front surface of an automobile seat; wherein the seat cover comprises a backrest portion with the form of a flat bag, defining an introduction aperture for the back of the seat to be covered; wherein the backrest portion is extended longitudinally across a portion of the seat to cover the base and the front of the seat.

### Brief description of the drawings

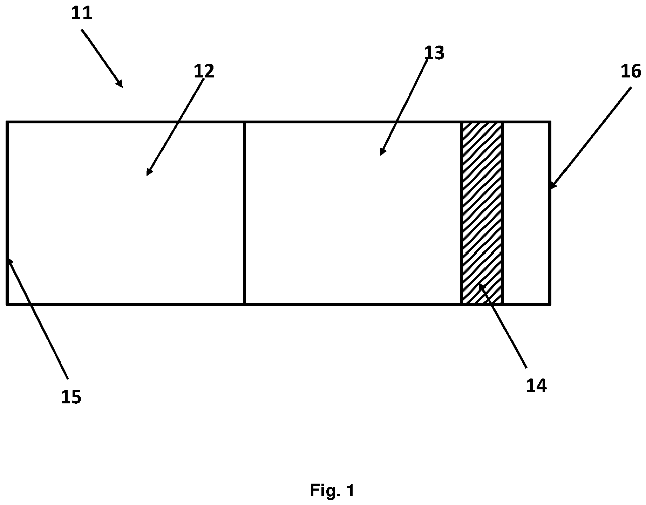

A more detailed explanation is given in the following description and is based on the attached figures, Figure 1 is a plan view of a seat cover to completely cover an automobile seat in a working position as a seat cover that can be readily removed.

### Description

In relation now to Figure 1, which shows a seat cover 11 adapted for a seat in a vehicle.

The seat cover 11 comprises a backrest portion 12 extended continuously over a portion of the seat 13, and an adjustment band 14 disposed near the far edge of the seat portion to form a single-piece wrapping that adapts to the dimensions of the seat to be covered for protection.

The backrest portion 12 is designed to cover the backrest of the seat and is presented in the form of a flat bag; the other portion of seat 13 is intended to cover the base and the front of the seat.

The seat cover 11 completely covers the entire front surfaces of the seat and is adapted to be attached, in a removable fashion, by the adjustment band 14, which can be separated from the seat portion 13 and the bottom part of the seat base.

The backrest portion 12 is defined by a top edge 15 at the top of the seat backrest that joins the anterior face of the backrest portion 12, upon which the user can support his back, to the rear face that covers the back of the backrest, as well as by lateral edges that physically join, totally or partially, the anterior face to the posterior face to define an opening for introduction of the seat back.

The seat portion 13 presents the form of a flat adjustable rectangular parallelogram defining an extensible distal edge toward the bottom part of the seat base so that the adjustment band 14 is oriented in a transverse direction to the seat portion 13 and toward the distal edge 16 of the seat portion 13.

The adjustment band 14 is mechanically attached to the longitudinal side edges of the seat portion 13, for example, by welds, sewn seams, or similar.

In a working position of the seat cover 11, the back of the seat is housed in the backrest portion 12, having been introduced through the entry aperture of the backrest portion 12, and the seat portion 13 extends over the seat base, while the far edge of the seat portion extends, in turn, toward the bottom part of the seat, so that the adjustment band 14 is completely detachable from the seat portion 13, without ceasing to be physically attached to the longitudinal side edges of the seat portion 13, so that the adjustment band 14 is extended toward the bottom of the seat base to favour the transversal tension of the seat portion 13 by attaching the adjustment band to the lower part of the seat base, connecting in a removable fashion the seat cover 11 to the seat itself; that is, it prevents the seat cover 11 from being displaced in any possible working condition; namely, the seat cover covers the vehicle seat.

The adjustment band and its attachments to the longitudinal side edges of the seat portion 13 are dimensioned so that the adjustment band 14 can be engaged and disengaged from the bottom part of the seat base to be covered, in the face of a predetermined force while, at the same time, ensuring its resistance to a weaker force.

## Claims

1. A seat cover to cover all the front surface of an automobile seat, the seat cover (11) comprises a backrest portion (12) with the form of a flat bag, defining an introduction aperture for the back of the seat to be covered; wherein the backrest portion (12) is extended longitudinally across a seat portion (13) to cover the base and the front of the seat, **characterised in that** the seat cover (11) comprises an adjustment band (14) disposed near the far edge (16) of the seat portion (13), the adjustment band (14) being attached to the longitudinal side edges of the seat portion (13) by means of a fastening system.

2. Seat cover according to claim 1; **characterised in that** the backrest portion (12) comprises an introduction opening dimensioned so that the seat back is introduced through the introduction opening in the position of the seat covering.

3. Seat cover according to claim 2; **characterised in that** the backrest portion (12) is presented in the form of a flat bag.

4. Seat cover according to claim 1; **characterised in that** the seat portion (13) is presented in the form of a rectangular parallelogram.

5. Seat cover according to claim 4; **characterised in that** the distal edge (16) is extensible toward the bottom front part of the seat base in the position of the seat cover.

6. Seat cover according to claim 5; **characterised in that** the adjustment band (14) can be engaged and disengaged at the bottom part of the seat base.

7. Seat cover according to claim 1; **characterised in that** the adjustment band (14) is oriented in a transverse direction to the seat portion (13) and toward the distal edge (16).

8. Seat cover according claims 1 to 7; **characterised in that** the seat cover (11) is made of a recyclable and/or recycled plastic material such as low-density polythene (LDPE), linear low-density polythene (LLDPE), medium-density polythene (MDPE), high-density polythene (HDPE), and/or mixtures thereof and/or other polymers, that can be made with organic, biodegradable, or compostable raw materials.

## Patentansprüche

1. Sitzbezug zum Bedecken der gesamten Vorderfläche eines Kraftfahrzeugsitzes, wobei der Sitzbezug (11) einen Rückenlehnenabschnitt (12) in Form eines flachen Kissens umfasst, das eine Einführungsöffnung für die Rückseite des zu bedeckenden Sitzes definiert; wobei sich der Rückenlehnenabschnitt (12) in Längsrichtung über einen Sitzabschnitt (13) erstreckt, um die Basis und die Vorderseite des Sitzes zu bedecken, **dadurch gekennzeichnet, dass** der Sitzbezug (11) ein Einstellband (14) umfasst, das in der Nähe des entfernten Rands (16) des Sitzabschnitts (13) angeordnet ist, wobei das Einstellband (14) mittels eines Befestigungssystems an den Längsseitenrändern des Sitzabschnitts (13) angebracht ist.

2. Sitzbezug nach Anspruch 1, **dadurch gekennzeichnet, dass** der Rückenlehnenabschnitt (12) eine Einführöffnung aufweist, die so bemessen ist, dass die Rückenlehne durch die Einführöffnung in der Position des Sitzbezugs eingeführt wird.

3. Sitzbezug nach Anspruch 2, **dadurch gekennzeichnet, dass** der Rückenlehnenabschnitt (12) in Form eines flachen Kissens vorliegt.

4. Sitzbezug nach Anspruch 1, **dadurch gekennzeichnet, dass** der Sitzabschnitt (13) in Form eines rechteckigen Parallelogramms ausgebildet ist.

5. Sitzbezug nach Anspruch 4, **dadurch gekennzeichnet, dass** der distale Rand (16) in der Position des Sitzbezugs zum unteren vorderen Teil der Sitzfläche hin ausziehbar ist.

6. Sitzbezug nach Anspruch 5, **dadurch gekennzeichnet, dass** das Einstellband (14) am unteren Teil der Sitzfläche ein- und ausrückbar ist.

7. Sitzbezug nach Anspruch 1, **dadurch gekennzeichnet, dass** das Einstellband (14) in Querrichtung zum Sitzabschnitt (13) und zum distalen Rand (16) hin ausgerichtet ist.

8. Sitzbezug nach den Ansprüchen 1 bis 7, **dadurch gekennzeichnet, dass** der Sitzbezug (11) aus einem recycelbaren und/oder recycelten Kunststoffmaterial wie Polyethylen niedriger Dichte (LDPE), linearem Polyethylen niedriger Dichte (LLDPE), Polyethylen mittlerer Dichte (MDPE), Polyethylen hoher Dichte (HDPE) und/oder Mischungen daraus und/oder anderen Polymeren, die mit organischen, biologisch abbaubaren oder kompostierbaren Rohstoffen herstellbar sind, besteht.

## Revendications

1. Housse de siège pour couvrir toute la surface avant d'un siège d'automobile, la housse de siège (11) comprenant une partie de dossier (12) ayant la forme d'un sac plat, définissant une ouverture d'introduction pour le dossier du siège à couvrir ; dans laquelle la partie de dossier (12) s'étend longitudinalement à travers une partie d'assise (13) pour couvrir la base et l'avant du siège, **caractérisée en ce que** la housse de siège (11) comprend une bande de réglage (14) disposée près du bord lointain (16) de la partie d'assise (13), la bande de réglage (14) étant fixée aux bords latéraux longitudinaux de la partie d'assise (13) au moyen d'un système de fixation.

2. Housse de siège selon la revendication 1, **caractérisée en ce que** la partie de dossier (12) comprend une ouverture d'introduction dimensionnée de telle sorte que le dossier de siège est introduit à travers l'ouverture d'introduction dans la position de la housse de siège.

3. Housse de siège selon la revendication 2, **caractérisée en ce que** la partie de dossier (12) est présentée sous la forme d'un sac plat.

4. Housse de siège selon la revendication 1, **caractérisée en ce que** la partie d'assise (13) est présentée sous la forme d'un parallélogramme rectangulaire.

5. Housse de siège selon la revendication 4, **caractérisée en ce que** le bord distal (16) est extensible vers la partie avant inférieure de la base de siège dans la position de la housse de siège.

6. Housse de siège selon la revendication 5, **caractérisée en ce que** la bande de réglage (14) peut être engagée et désengagée au niveau de la partie inférieure de la base de siège.

7. Housse de siège selon la revendication 1, **caractérisée en ce que** la bande de réglage (14) est orientée dans une direction transversale à la partie d'assise (13) et vers le bord distal (16).

8. Housse de siège selon les revendications 1 à 7, **caractérisée en ce que** la housse de siège (11) est constituée d'une matière plastique recyclable et/ou recyclée telle que du polyéthylène basse densité (LDPE), du polyéthylène basse densité linéaire (LLDPE), du polyéthylène moyenne densité (MDPE), du polyéthylène haute densité (HDPE) et/ou des mélanges de ceux-ci et/ou d'autres polymères, qui peuvent être fabriqués avec des matières premières organiques, biodégradables ou compostables.
